(19) **Europäisches Patentamt European Patent Office Office européen des brevets**

(11) **EP 2 725 918 B1**

(12) **EUROPEAN PATENT SPECIFICATION**

(45) Date of publication and mention
of the grant of the patent:
**16.03.2016 Bulletin 2016/11**

(21) Application number: **11868533.8**

(22) Date of filing: **29.06.2011**

(51) Int Cl.:
**A23D 7/015** (2006.01)

(86) International application number:
**PCT/CN2011/076582**

(87) International publication number:
**WO 2013/000137 (03.01.2013 Gazette 2013/01)**

(54) **LOW-FAT NON-PROTEIN WHIPPABLE TOPPING COMPOSITION**

PROTEINLOSE FETTARME DRESSING-ZUSAMMENSETZUNG

COMPOSITION DE NAPPAGE À FOUETTER À FAIBLE TENEUR EN MATIÈRES GRASSES ET
EXEMPTE DE PROTÉINES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.05.2014 Bulletin 2014/19**

(73) Proprietor: **Dow Global Technologies LLC
Midland, MI 48674 (US)**

(72) Inventors:
• **CAO, Kevin K.
Shanghai 201210 (CN)**
• **YAN, Zheng Y
Shanghai 201100 (CN)**
• **HUEBNER, Britta
NI 31311 Uetze (DE)**

• **SHI, Eric
Shanghai (CN)**
• **SHI, Susan X. Qin
Shanghai 200081 (CN)**
• **CAO, Yurong
Shanghai 200123 (CN)**

(74) Representative: **f & e patent
Fleischer, Engels & Partner mbB, Patentanwälte
Braunsberger Feld 29
51429 Bergisch Gladbach (DE)**

(56) References cited:
WO-A1-2004/021804    WO-A2-99/38389
CN-A- 1 078 352    CN-A- 1 166 921
CN-C- 1 045 520    US-A- 5 759 609
US-A- 6 033 711

EP 2 725 918 B1

Printed by Jouve, 75001 PARIS (FR)

**EP 2 725 918 B1**

**Description**

The present invention relates to a low-fat non-protein whippable topping composition comprising cellulose ethers.

Health conscious consumers are seeking to reduce their fat and caloric intake. Most important, "trans fat" which is an unsaturated fat with trans-isomer and emerges unavoidably from partial hydrogenation of vegetable fat increases the risk of coronary heart disease. However, most incumbent whipped topping products in the market comprise large amount of trans fat. Accordingly, demands for no-fat, low-fat and "light"-fat food products are growing substantially in recent years, specially in snack and dessert food areas (such as whipped toppings).

However, the majority of whipped topping products in the market have fat content around 20 % by weight, especially from 18 to 25 % by weight. Additionally, nearly all the whipped topping products comprise protein. Although low-fat (7 to 16 % by weight) whipped toppings exist in the market, they do comprise protein. Some commercially available whipped toppings have a fat content of 15 to 16 % by weight, but they comprise considerable amounts of sodium caseinate.

US-A-4,208,444 discloses a whippable fluid topping composition having a caloric content not substantially greater than about 170-180 cal per 100 g and freeze-thaw stability for producing a stable whipped topping. The formulation comprises about 1 to 5% by weight of a normally water-dispersible or soluble protein, about 0.20 to 2.2% by weight of stabilizing gum, 15 to 25% by weight of sweetener, about 8 to 10% by weight of high solids fat, about 0.20 to 1.0% by weight of ethoxylated mono- and diglyceride, and about 0.01 to 0.2% by weight of polyoxyethylene sorbitan fatty acid ester. Preferred stabilizing gums are microcrystalline cellulose; guar gum; Irish moss (carrageenan); gum tragacanth; gum acacia; gum karaya; locust bean gum; sodium carboxymethyl cellulose; cellulose ethers such as methyl cellulose, hydroxypropyl methyl cellulose; low methoxy pectin; propylene glycol alginate; sodium alginate, and combinations of the above. One preferred stabilizer taught is Avicel RC 581, which is a mixture of 89% cellulose gel (microcrystalline cellulose) and 11% cellulose gum (sodium carboxymethyl cellulose). In the examples a combination of Avicel RC 581 with a small amount of carrageenan is used.

US-A-5,759,609 discloses a low-fat whipped topping having excellent performance and organoleptic properties comprising about 3-7 % by weight of fat, about 0.2-0.8 % by weight of emulsifiers, about 1.0-1.75 % by weight of stabilizers, about 30-55 % by weight of water soluble carbohydrates and about 35 to 65 % by weight of water. It is generally mentioned that the stabilizers are selected from carrageenan, guar gum, alginate, xanthan gum and the like or methylcellulose, carboxymethyl cellulose, ethylcellulose, hydroxypropyl methylcellulose, micro-crystalline cellulose and the like, and mixtures thereof. Hydroxypropyl methylcellulose and methylcellulose are preferred. It is further taught that proteins may be contained in an amount of from 0 to 10 % by weight because they are useful to improve the nutritional qualities of the toppings and to facilitate and maintain a whipped structure. Protein also aids in emulsification. A preferred concentration of protein in the topping is 0.3 to 3.0 % by weight. All exemplary toppings contain protein in an amount of 1.55 % by weight (0.8 % by weight of soy protein and 0.75 % by weight of sodium caseinate) and a combination of hydroxypropyl methylcellulose and methylcellulose.

US-A-5,384,145 discloses a low-fat, frozen whipped topping having a total solids level of about 38 to 50% by weight and comprising water, water-soluble carbohydrates, fat, chemical emulsifier, water-soluble protein and hydrocolloid stabilizing agent and containing on a weight basis from 8 to 15% by weight of fat, from 0.05 to 1% by weight of hydrocolloid stabilizing agent, about 1.4 to 2.2 parts of chemical emulsifier per 100 parts of fat, about 5.0 to 6.0 parts by weight of water soluble protein per 100 parts of fat and wherein the formulation is free of non-fat milk solids. Hydrocolloid stabilizing agents include polysaccharide gums, for example vegetable or synthetic gums such as carrageenan, xanthan, guar, locust bean, alginate and the like, or carboxymethyl cellulose, methylcellulose ether and the like, and mixtures thereof. In the only example vegetable gums are used as stabilizer.

US-A-5,707,677 discloses a process for making fat-free/low-fat frozen whipped topping comprising from 45 to 65 % by weight of water and 0.5 to 3 % by weight of a food starch in combination with 0 to 10 % by weight of fat, 25 to 45 % by weight of water-soluble carbohydrates (and/or their alcohol derivatives), 0.1 to 1% by weight of polysaccharide gums, 0.2 to 1 % by weight of water-soluble protein, and 0.1 to 1 % by weight of emulsifier. The stabilizers may be selected from vegetable or synthetic gums such as carrageenan, xanthan, guar, locust bean, alginate and the like, or carboxymethyl cellulose, methylcellulose ether and the like, and mixtures thereof. A combination of xanthan gum and galactomannan gum, such as locust bean gum and/or guar gum, has proven to be especially useful in and this combination is also employed in the examples.

What all of the above-described low-fat toppings of the prior art have in common is that they contain a considerable amount of protein. However, non-protein is another requirement from some consumers. Moreover, if a low fat content could be combined with the elimination of protein without compromising mouthfeel, cost could be potentially decreased by 20% compared to the high-fat protein-containing whipped topping. In short, low-fat non-protein whipped toppings are very promising products either from producers or customers point of view.

Unfortunately, low-fat whipped toppings have some drawback, like low foam stability and low overrun because of instability of the three-dimensional continuous network formed by fat throughout the whole topping volume and low viscosity caused by low fat content. Furthermore, non-protein containing formulations usually also have a low overrun issue caused by the poor foaming performance at the beginning whipping stage compared to protein-containing products.

Thus, the problem to be solved by the present invention is to provide a new low-fat whippable topping composition which is substantially free of protein and, when whipped, affords excellent firmness (mouthfeel), good foam appearance even at high temperature, and comparable overrun, height change ratio and water syneresis compared to the known high-fat protein-containing products.

The problem is solved by a whippable topping composition comprising:

(a) 7 to 24 % by weight of water-soluble carbohydrates;
(b) 8 to 16 % by weight of fat;
(c) 0.3 to 1.5 % by weight of emulsifier;
(d) 0.2 to 1 % by weight of optionally methylated hydroxypropyl cellulose;
(e) 0.05 to 0.5 % by weight of carboxymethyl cellulose;
(f) 0 to 1 % by weight of non-protein hydrocolloid stabilizer different from components (a), (d) and (e);
(g) 0 to less than 0.2 % by weight of protein; and
(h) 53 to 84 % by weight of water,

all percentages being based on the total weight of the whippable topping composition,
wherein the weight ratio of optionally methylated hydroxypropyl cellulose (d) to carboxymethyl cellulose (e) is within the range of from 1.7:1 to 3.5:1.

The present invention is also directed to a whipped topping prepared from the whippable composition and to the use of the whippable composition and the whipped topping to prepare an edible product.

Moreover, the present invention relates to methods for preparing the whippable composition.

The present inventors surprisingly found that the use of a combination of optionally methylated hydroxypropyl cellulose, preferably hydroxypropyl methylcellulose (HPMC), and carboxymethyl cellulose (CMC) in a weight ratio of from 1.7 to 3.5, preferably from 1.9 to 3.5, and more preferably from 2 to 3.4, as stabilizer in a low-fat non-protein topping can provide balanced performance of the whipped topping.

As used in the present invention the term "non-protein" is understood to mean substantially free of protein, .i.e. comprising no protein or protein in only minor amounts of less than 0.2 % by weight, preferably less than 0.1 % by weight, and more preferably less than 0.05 % by weight, each based on the total weight of the whippable topping composition.

The whippable topping composition of the present invention comprises 7 to 24 % by weight, preferably 8 to 22 % by weight, more preferably 10 to 20 % by weight, and most preferably 12 to 18 % by weight of water-soluble carbohydrates (a), all percentages being based on the total weight of the whippable topping composition. The term "water-soluble carbohydrates " as used in the present application includes one type of water-soluble carbohydrates as well as mixtures of different types of water-soluble carbohydrates. The term "carbohydrates" as used herein excludes derivatives of carbohydrates, such as ester or ether derivatives like cellulose ethers. The water-soluble carbohydrates are employed in the present whippable topping composition to supply solids and sweetness. Typically, monosaccharides (e.g. glucose (dextrose) and fructose) and dissacharides (e.g. sucrose and maltose) are included to provide the desired level of sweetness. In some embodiments the water-soluble carbohydrates are added to the whippable topping composition in the form of a syrup such as glucose syrup or glucose-fructose syrup; in these cases the water-soluble carbohydrates in the whippable topping composition may be referred to as "dry syrup solids" such as dry glucose syrup solids or dry glucose-fructose syrup solids. Glucose syrup is a liquid starch hydrolyzate of mono-, di, and higher saccharides and can be made from any source of starch; corn, wheat, rice and potatoes are the most commons sources. There are several types of glucose syrup on the market including for example high-glucose syrup and high-maltose syrup. Glucose syrup generally contains varying amounts of glucose, maltose and higher oligosaccharides and typically contains 10 to 43 % by weight of glucose. The dextrose equivalent (DE) may range from 20 - 70. Most of the glucose syrups prepared by enzymatic hydrolysis have a DE of 60 - 70. The products prepared by acid hydrolysis typically have a DE of 55 - 60. In special cases it is possible to prepare syrups with up to 70 or even 95 % by weight of maltose. A preferred glucose syrup is corn syrup comprising mainly glucose. Preferably the corn syrup has a dextrose equivalent DE of about 65. Glucose-fructose syrup (= high-fructose corn syrup HFCS) is prepared from corn syrup by enzymatic isomerization of some of its glucose to fructose. Typically, glucose-fructose syrup comprises fructose in an amount of from 40 to 58 % by weight, preferably from 42 to 55 % by weight; and glucose in an amount of from 40 to 58 % by weight, preferably from 41 to 53 % by weight, each based on dry solids. The remaining components are higher saccharides in minor amounts of from 2 to 6 % by weight, based on dry solids. The use of high-fructose corn syrup as sweetener in the food industry is very common in the U.S.A. Two exemplary types of high-fructose corn syrup that may be employed in the whippable topping composition of the present invention are HFCS 55 comprising about 55 % by weight of fructose, about 41 % by weight of glucose, about 2 % by weight of maltose and about 2 % by weight of other higher saccharides; and HFCS 42 comprising about 42 % by weight of fructose, about 52 % by weight of glucose, and about 6 % by weight of higher saccharides, each based on dry solids. Typically, the syrups that may be used to prepare the present whippable topping composition comprise 70 to 90 % by weight, preferably 75 to 85 % by weight, more preferably 77 to 83 % by weight of water-soluble carbohydrates as described above and 10 to 30 % by weight, preferably 15 to 25 % by weight, more preferably 17 to 23 % by weight of water.

Further exemplary water-soluble carbohydrates that are useful as sweeteners in the present invention are sucrose (preferably added in the form of granulated sugar), maltose, invert sugar, galactose, lactose hydrolyzates, lactose and mixtures thereof including mixtures with the syrups as described above.

Preferred water-soluble carbohydrates are a combination of dry glucose-fructose syrup solids (preferably comprising about 42 % by weight of fructose, such as HFCS 42) and dry glucose syrup solids, for example in a weight ratio of from 3:1 to 5:1, more preferably about 4:1.

The whippable topping composition of the present invention comprises 8 to 16 % by weight, preferably 9 to 15 % by weight, more preferably 9 to 14 % by weight, and most preferably 10 to 13 % by weight of fat (b), all percentages being based on the total weight of the whippable topping composition. The term "fat" as used in the present application includes one type of fat as well as mixtures of different types of fat. The fats may be either solid or liquid at room temperature (23 °C), i.e. the term fat as used herein includes fats that are liquid at room temperature (typically called "oils" by the consumers) and fats that are solid at room temperature (typically called "fats" by the consumers). Fats within the meaning of the present invention are edible fatty acid triglycerides of natural origin as well as edible synthetic fatty acid triglycerides, fatty acid triglycerides of natural origin being preferred. The fats used in the whippable topping composition of the present invention are preferably characterized by a typical solid fat index:

| 20°C | 85-94 %, preferably 87-92 % |
|------|------------------------------|
| 22°C | 65-75 %, preferably 68-72 % |
| 30°C | 34-45 %, preferably 37-41 % |
| 35°C | 10-23 %, preferably 14-18 % |
| 40°C | 5-15 %, preferably 7-10 % |

The solid fat index (SFI) is a measure of the weight percentage of fat in the crystalline (solid) phase to total fat (the remainder being in the liquid phase) across a temperature gradient. The SFI is measured using a dilatometer that measures the expansion of a fat as it is heated; density measurements are taken at a series of standardized temperature check points.

In some embodiments the fat has a melting range from 35 to 45°C.

Vegetable fats as well as animal fats may be used, vegetable fats being preferred. Such fats or oils may be fully or partially hydrogenated. A wide variety of vegetable fats may be employed and examples include partially hydrogenated palm kernel oil; partially hydrogenated coconut oil; partially hydrogenated cottonseed oil, partially hydrogenated peanut oil, partially hydrogenated olive oil, partially hydrogenated corn oil, partially hydrogenated soybean oil and partially hydrogenated palm oil; and mixtures thereof. Preferred vegetable fats for use in the present invention have a iodine value as determined according to AOCS Official Method Cd 1-25 (Wijs method) within the range of from 0.15 to 7, more preferably from 0.2 to 4, and most preferably from 0.35 to 2. Animal fats, such as milk fat, are also functional in the present whippable topping composition. Milk fat, of course, would not be used in the production of non-dairy formulations.

The whippable topping composition of the present invention comprises 0.3 to 1.5 % by weight, preferably 0.4 to 1.3 % by weight, more preferably 0.5 to 1 % by weight, and most preferably 0.6 to 0.9 % by weight of emulsifier (c), all percentages being based on the total weight of the whippable topping composition. The term "emulsifier" as used in the present application includes one type of emulsifier as well as mixtures of different types of emulsifiers. Exemplary emulsifiers for use in the present invention include lecithin; hydroxylated lecithin; sodium stearoyl lactylat (SSL); mono, di, or polyglycerides of fatty acids such as glyceryl mono- and distearate (GMS) and polyglycerol esters of fatty acids (PGE) such as triglycerol monostearate (TGMS); polyoxyethylene ethers of fatty esters of polyhydric alcohols such as the polyoxythylene ethers of sorbitan monostearate (Tween 60) or the polyoxyethylene ethers of sorbitan distearate; fatty esters of polyhydric alcohos such as sorbitan monostearate; mono- and diesters of glycols such as propylene glycol monostearate and propylene glycol monopalmitate; sucrose esters; and the esters of carboxylic acids such as lactic, citric, and tartaric acids with the mono- and diglycerides of fatty acids, such as glycerol lacto palmitate and glycerol lacto stearate; and mixtures thereof. In preferred embodiments a mixture of SSL, Tween 60 and PGE is used, preferably in a weight ratio of about 1:1:1.

The whippable topping composition of the present invention comprises 0.2 to 1 % by weight, preferably 0.3 to 0.9 % by weight, more preferably 0.4 to 0.8 % by weight, and most preferably 0.5 to 0.7 % by weight of optionally methylated hydroxypropyl cellulose(d) and 0.05 to 0.5 % by weight, preferably 0.1 to 0.4 % by weight, more preferably 0.1 to 0.3 % by weight, and most preferably 0.15 to 0.25 % by weight of CMC (e), all percentages being based on the total weight of the whippable topping composition.

The optionally methylated hydroxypropyl cellulose can be hydroxypropyl methylcellulose (HPMC) or hydroxypropyl cellulose (HPC). In preferred embodiments the optionally methylated hydroxypropyl cellulose is HPMC. Preferably, the HPMC for use in the present invention has an average degree of substitution $DS_{methyl}$ of from 1.4 to 2.5, more preferably of from 1.6 to 2.0, and most preferably from 1.7 to 1.9 and a molar degree of substitution $MS_{hydroxypropyl}$ of from 0.1 to 0.4, more preferably of from 0.1 to 0.3 and most preferably of from 0.1 to 0.2 . Typically, viscosities of 2 % by weight aqueous HPMC solutions at 25°C, determined with a Brookfield LVT viscometer (3# spindle, testing speed 50 rpm), range from 20 to 100 mPa·s, preferably from 40 to 70 mPa·s, more preferably from 48 to 60 mPa·s, and most preferably the 2 % by weight viscosity is about 50 mPa·s. Examples of commercially available HPMCs that are useful in the present invention include Methocel F50 ($DS_{methyl}$ = 1.7-1.9; $MS_{hydroxypropyl}$ = 0.1-0.2; 2 % by weight viscosity = 50 mPa·s), available from The Dow Chemical Company, Midland, U.S.A.

A preferred CMC for use in the present invention has an average degree of substitution $DS_{carboxymethyl}$ of from 0.4 to 1.5 more preferably of from 0.5 to 1.0 and most preferably from 0.65 to 0.95. Typically, viscosities of 2 % by weight aqueous CMC solutions at 25°C, determined with a Brookfield LVT viscometer (3# spindle, testing speed 50 rpm), range from 1200 to 3000 mPa·s, preferably from 1800 to 2300, and more preferably from 1900 to 2100. Examples of commercially available CMCs that are useful in the present invention include Walocel CRT 2000PA ($DS_{carboxymethyl}$ = 0.82-0.95; 2 % by weight viscosity = 2000 mPa·s), available from The Dow Chemical Company.

As already described before, it is an essential feature of the present invention to keep the amounts of optionally methylated hydroxypropyl cellulose and CMC within the weight ratio range of from 1.7:1 to 3.5:1.

In addition to the optionally methylated hydroxypropyl cellulose and CMC the whippable topping composition of the present invention optionally comprises 0.05 to 1 % by weight, preferably 0.08 to 0.5 % by weight, and more preferably 0.1 to 0.5 % by weight of a further non-protein hydrocolloid stabilizer (f), all percentages being based on the total weight of the whippable topping composition. The term "non-protein hydrocolloid stabilizer" as used in the present application includes one type of non-protein hydrocolloid stabilizer as well as mixtures of different types of non-protein hydrocolloid stabilizers. Typically, the non-protein hydrocolloid stabilizer (f) is a polysaccharide hydrocolloid (including polysaccharide derivatives), preferably a natural gum. Polysaccharide hydrocolloids are polysaccharides that form colloidal dispersions in water. Typically, they are also able to form gels. Examples of natural gums that are useful in the present invention include vegetable gums such as guar gum, locust bean gum, gum arabic and konjac gum; gums derived from algae such as carrageenan gum (e.g. κ-carrageenan gum) and alginate; gums derived from bacteria such as gellan gum and xanthan gum; and mixtures thereof. κ-Carrageenan gum, alginate, and gellan gum are especially preferred.

The optionally methylated hydroxypropyl cellulose, CMC and optional additional stabilizers offer bodying and water binding properties to the whippable topping composition.

The present whippable topping composition may contain further optional ingredients such as flavoring agents and colorants.

Water makes up the remainder of the whippable topping composition and is contained in an amount adding up to 100 % by weight of the composition. The amount of water ranges from 53 to 84 % by weight, preferably from 56 to 82 % by weight, more preferably from 59 to 80 % by weight, even more preferably from 64 to 79 % by weight, and most preferably from 68 to 75 % by weight, all percentages being based on the total weight of the whippable topping composition.

In a preferred embodiment the whippable topping composition comprises:

(a) 10 to 20 % by weight of water-soluble carbohydrates;
(b) 9 to 14 % by weight of fat;
(c) 0.5 to 1 % by weight of emulsifier;
(d) 0.5 to 1 % by weight of optionally methylated hydroxypropyl cellulose, preferably HPMC;
(e) 0.1 to 0.3 % by weight of carboxymethyl cellulose;
(f) 0.1 to 0.5 % by weight of non-protein hydrocolloid stabilizer different from components (a), (d) and (e);
(g) 0 to 0.05 % by weight of protein; and
(h) 59 to 79 % by weight of water,

all percentages being based on the total weight of the whippable topping composition.

The whippable topping composition of the present invention is typically an oil-in-water emulsion and can be whipped by any means that are normally used to prepare whipped toppings from liquid formulations such as a common domestic whipping machine for use in the kitchen. The present invention is also directed to whipped toppings prepared from the above-described whippable topping composition. Typically, the low-fat non-protein whipped toppings of the present invention have an overrun of at least 300 %, which is a value regarded acceptable by most of the consumers.

Moreover, the whipped toppings exhibit excellent firmness (mouthfeel) and good foam appearance even at higher temperatures. Their height change ratio (definition is given in the examples) and water syneresis is at least as good as that of commercial high-fat protein-containing products.

The whippable topping compositions or the whipped toppings of the present invention can be used to prepare a large variety of edible products.

The present whippable topping compositions can be obtained by any method known to prepare oil-in-water emulsions. One exemplary method comprises the following steps:

(i) dispersing or dissolving water-soluble carbohydrates (a), one part of emulsifier (c), optionally methylated hydroxypropyl cellulose (d), carboxymethyl cellulose (e), optional further stabilizer (f), optional protein (g), and further optional water-soluble or water dispersible ingredients in water to form an aqueous phase;
(ii) dispersing the other part of the emulsifier (c) in the fat (b) to form an oil phase, preferably by melting the fat (b);
(iii) mixing the aqueous phase from (i) with the oil phase from (ii);
(iv) pasteurizing the mixture;
(v) homogenizing the mixture;
(vi) cooling down the mixture quickly to a temperature of from 4 to 8°C; and
(vii) aging the mixture at a temperature of from 3 to 7°C.

The aqueous phase is formed in step (i) by dispersing or dissolving the above-motioned ingredients in water. This step is typically performed under the influence of heat and agitation (stirring) in order to achieve good dissolution/dispersion. Preferred temperatures range from 70 to 95°C, more preferably from 85 to 90°C. The ingredients may be added to the already heated water or heating may start after addition of the ingredients. The selected temperature may be maintained during mixing.

In step (ii) the oil phase is formed by dispersing the other part of the emulsifier (c) in the fat (b), preferably by heating the fat, typically to a temperature of from 55 to 75°C, preferably from 60 to 70°C, in order to melt the fat. Dispersion is typically assisted by agitation.

In step (iii) the aqueous and oil phases are combined and mixed, typically under agitation (stirring) in order to achieve good dispersion. Preferably, the oil phase is added to the aqueous phase. If the mixing is performed at higher temperatures, typically of from 60 to 90°C, preferably from 70 to 80°C, pasteurizing step (iv) is conducted simultaneously. Alternatively, the aqueous and oil phases may be first mixed and then pasteurized in a subsequent step at the preferred temperatures described before. In the pasteurizing step (iv) (performed simultaneously or subsequently) the described temperatures are typically maintained for a time period of from 15 to 40 min, preferably from 20 to 30 min. Pasteurizing reduces microorganism to ensure an acceptable shelf life of the edible topping composition.

Homogenization, preferably high pressure homogenization, e.g. at pressures from 20,000 to 55,000 kPa (200 to 550 bar), more preferably from 25,000 to 45,000 kPa (250 to 450 bar), and most preferably at about 35,000 kPa (350 bar), of the composition is performed next in step (v). Although homogenization (v) may be accomplished in one stage, in some embodiments, homogenization is carried out in two stages, i.e. in a first stage operated at a higher pressure and a second stage operated at a lower pressure. Preferably, the pressure is maintained during the first stage at a minimum of 20,000 kPa (200 bar) and a maximum of 55,000 ka (550 bar), preferably at about 35,000 kPa (350 bar), and the second stage is preferably operated at a pressure of at least 2,000 kPa (20 bar) and less than 10,000 kPa (100 bar), preferably at about 5,000 kPa (50 bar).

Quick cooling down to a temperature of from 4 to 8°C, preferably to about 4°C, follows in step (vi). The quick cooling down allows the fat to well crystallize and keep the fat globuli small.

An aging step (vii) at a temperature of from 3 to 7°C, preferably at about 4°C, is performed afterwards. The composition is typically held at these temperatures for 60 to 300 min, preferably for 180 to 240 min. Aging promotes the crystallization of the fat globuli, which is a precondition for the whippability of the topping composition. A poor fat crystallization results in a low overrun of the whipped topping.

An alternative exemplary method of preparing the above-described whippable topping composition steps comprises the following steps:

(i') dispersing emulsifier (c), optionally methylated hydroxypropyl cellulose (d), carboxymethyl cellulose (e), optional further stabilizer (f) and optional protein (g) in the fat (b) to form an oil phase, preferably by melting the fat (b);
(ii') dissolving or dispersing water-soluble carbohydrates (a) and further optional water-soluble or water-dispersible ingredients in water to form an aqueous phase;
(iii') mixing the aqueous phase from (ii') with the oil phase from (i');
(iv) pasteurizing the mixture;
(v) homogenizing the mixture;
(vi) cooling down the mixture quickly to a temperature of from 4 to 8°C; and

(vii) aging the mixture at a temperature of from 3 to 7°C.

In step (i') the oil phase is formed by dispersing the above ingredients in the fat (b), preferably by heating the fat, typically to a temperature of from 55 to 75°C, preferably from 60 to 70°C, in order to melt the fat. Dispersion is typically assisted by agitation.

The aqueous phase is formed in step (ii') by dissolving water-soluble carbohydrates (a) and dissolving or dispersing further optional water-soluble or water-dispersible ingredients in water. This step is typically performed under the influence of heat and agitation (stirring) in order to achieve complete dissolution of the water-soluble carbohydrates (a) and good dissolution/dispersion of any other optional ingredients. Preferred temperatures range from 55 to 75°C, more preferably from 60 to 80°C. The ingredients may be added to the already heated water or heating may start after addition of the ingredients. The selected temperature may be maintained during mixing.

In the mixing step (iii') the aqueous and oil phases are combined and mixed, , typically under agitation (stirring) in order to achieve good dispersion. Preferably, the aqueous phase is added to the oil phase. This kind of addition is sometimes called "phase inversion method". Further steps (iv) to (vii) are preformed as in the first alternative method and everything described above equally applies to this alternative.

The whippable topping composition obtained after the aging step (vii) may be frozen for long shelf life, typically by cooling down the composition to a temperature of about -18°C. Usually, the whippable topping composition will be put on the market in the frozen state and kept frozen until the consumer wants to whip it. Before whipping, the customer have to thaw it, typically to a temperature of about 4°C. Alternatively, the whippable topping composition obtained after the aging step (vii) may be whipped directly, if the whipped product is to be commercialized. Like for the unwhipped topping composition, shelf life of the whipped topping can be increased by freezing it.

Some embodiments of the invention will now be described in detail in the following examples wherein all parts and percentages are by weight unless otherwise specified.

Raw Materials

| Ingredient | Supplier |
| --- | --- |
| Hydrogenated palm kernel oil(LHK41-01ZY, LHK41-01ZY) | Yihai Kerry, Shanghai, China |
| Tween 60 (GLYCOSPER SE S-20) | LONZA, Basel, Switzerland |
| Sodium Stearoyl Lactylat (FINAMUL-97) (SSL) | FINE ORGANICS, Mumbai, India, |
| Polyglycerol esters of fatty acids (PGE) | PALSGAARD, Juelsminde, Denmark |
| Glyceryl mono- and distearate (GMS) | Zhengtong Chemical Co., Ltd, Henan, China |
| Glucose-fructose syrup (about 80 wt % solids content) | Xiwang Biochem, Shandong, China |
| Glucose syrup (about 80 wt % solids content) | Haocheng Co. Shanghai, China |
| Granulated sugar | Taikoo, Shanghai, China |
| HPMC (METHOCEL F50) | The Dow Chemical Company, Midland, U.S.A. |
| CMC (WALOCEL CRT 2000PA) | The Dow Chemical Company, Midland, U.S.A. |
| Alginate | FMC, Philadelphia, U.S.A |
| Gellan gum | Xinrong Company, Shanghai, China |
| κ-Carrageenan gum | Brilliant Gum Co.,LTD, Shanghai, China |
| Topping A (fat content 23 %, protein-containing) ("Topp A") | commercial high-fat protein-containing topping available in China |
| Topping B (fat content 23 %, protein-containing) ("Topp B") | commercial high-fat protein-containing topping available in China |

Testing methods

Overrun, texture (mouthfeel), height change ratio, water syneresis and foam appearance were measured to evaluate the performance of the whipped toppings. Among these properties, overrun, texture analysis (mouthfeel) and height change ratio are most critical to consumers.

(1) Overrun:

Overrun was determined by using the following equation, where $M_1$ is the mass of a fixed volume of unwhipped topping and $M_2$ the mass of the same volume of whipped topping.

$$overrun = \frac{M_1 - M_2}{M_2} \times 100\%$$

(2) Texture (Firmness):

Texture of samples was analyzed by a texture analyzer produced by Micro Stable System. A whipped topping was packed into a plastic box for measurement. From texture analysis, firmness of the samples could be evaluated, which is an indicator of mouthfeel. Settings of the texture analyzer:

Test mode: compression;
Test option: return to start.
Trigger force: 5 g.
Pre-test speed: 1 mm/s
Test speed: 1 mm/s
Post-test speed: 5 mm/s
Test distance: 20 mm
Probe: P/36R

(3) Height Change Ratio

A whipped topping was molded in peak-shape, and its height was measured at 38° C and room temperature (21 to 23°C) every hour, respectively. The height change ratio could be calculated by the following equation:

$$(H_1 - H_2) / H_1$$

where $H_1$ is the initiate peak height, and $H_2$ is the end-point peak height.

(4) Water syneresis

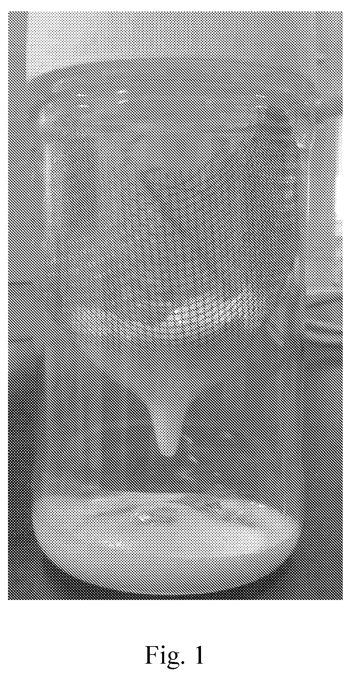

Testing was conducted at both room temperature (21 to 23°C) and 38° C to evaluate water syneresis even in hot weather.
Water syneresis was measured by a self-made instrument, shown in Fig. 1. Firstly, an empty bottle with a lid was weighed and its weight was noted as $m_1$. Then, a metal gauze was put in the bottle. Some certain mass (M) of whipped topping was put on the metal gauze. Thirdly, the whole bottle was put into an oven at 38° C. Fourthly, after about 220 min, the bottle was taken out from the oven, and the metal gauze and topping were taken out of the bottle. Lastly, the weight of the bottle and lid was determined and noted as $m_2$. So the water syneresis per g of topping could be calculated by $(m_2 - m_1) / M$.

(5) Foam appearance

Change of foam appearance could be monitored by a high throughput instrument (XCM) equipped with a CCD camera at an interval of 15 min.

Preparation of whipped toppings

The inventive whippable topping compositions (IE 1 to IE 5) and comparative whippable topping compositions (CE 9 to CE 13) were prepared as follows from the ingredients listed in the Table:

HPMC, CMC and other gums were added into water and stirred for 10 min at 1000 rpm and 90°C. Additional water was added, if necessary to balance water evaporation. Then glucose-fructose-syrup and glucose syrup (or granulated sugar) were added into the water phase and it was stirred for additional 10 min at 1000 rpm and 40°C. Next, one part of the emulsifiers was added into the water phase and it was stirred for additional 10 min at 1000 rpm and 40°C.

For preparing the oil phase the fat was molten in a water bath at 65 ° C and stirred at 500 rpm. The remainder of the emulsifiers was added into the oil phase at 65° C and it was stirred at 500 rpm for 15 min.

The oil phase was added into the aqueous phase slowly at 75° C. It was stirred at 1500 rpm and 75°C for 30 min.

The inventive whippable topping compositions (IE 6 to IE 8) were prepared as follows from the ingredients listed in the Table:

For preparing the oil phase the fat was molten in a water bath at 70° C and stirred at 500 rpm. Emulsifiers, HPMC, CMC, and other gums were added into the oil phase at 70° C and it was stirred at 500 rpm for 15 min.

Glucose-fructose-syrup and glucose syrup (or granulated sugar) were added into 70°C water and it was stirred for 10 min at 1000 rpm and 70°C.

The aqueous phase was added into the oil phase slowly at 70° C. It was stirred at 1500 rpm and 70°C for 30 min.

Afterwards, the compositions of all examples IE 1 to IE 8 and CE 9 to CE 13 were subjected to high pressure homogenization (300 bar/50 bar), then aged at 4°C for 240 min, freezed at -18°C, thawed to 4°C and whipped using the whipping machine "KitchenAid® K45SS" (bowl size is about 4.25 liters) at speed 6.

Table 1: Formulation Overview (amounts in % by weight)

| | IE 1 | IE 2 | IE 3 | IE 4 | IE 5 | IE6 | IE7 | IE8 | CE 9* | CE10* | CE11* | CE12* | CE13* |
|---|---|---|---|---|---|---|---|---|---|---|---|---|---|
| Hydrog. palm kernel oil | 10.00 | 10.00 | 10.00 | 10.00 | 10.00 | 10.00 | 10.00 | 13.00 | 10.00 | 10.00 | 10.00 | 10.00 | 10.00 |
| Tween 60 | 0.20 | 0.30 | 0.20 | 0.20 | 0.20 | 0.20 | | | 0.20 | 0.20 | 0.20 | 0.20 | 0.20 |
| SSL | 0.20 | 0.20 | 0.20 | 0.20 | 0.20 | 0.20 | 0.62 | 0.62 | 0.20 | 0.20 | 0.20 | 0.20 | 0.20 |
| PGE | 0.20 | 0.20 | 0.20 | 0.20 | 0.20 | 0.20 | | | 0.20 | 0.20 | 0.20 | 0.20 | 0.20 |
| GMS | | | | | | | 0.21 | 0.21 | | | | | |
| Glucose-fructose-syrup | 16.00 | 16.00 | | 16.00 | 16.00 | 16.00 | | 19.20 | | | 16 | 16 | 16 |
| Glucose syrup | 4.00 | 4.00 | | 4.00 | 4.00 | 4.00 | | 4.80 | 4.00 | | 4 | 4 | 4 |
| Granulated sugar | | | 20.00 | | | | 22.00 | | 16.00 | 20.00 | | | |
| HPMC | 0.50 | 0.50 | 0.50 | 0.50 | 0.50 | 0.50 | 0.50 | 0.50 | 0.50 | 0.50 | 0.50 | | 0.5 |
| CMC | 0.25 | 0.15 | 0.15 | 0.15 | 0.15 | 0.15 | 0.15 | 0.15 | 0.30 | 0.45 | | 0.15 | 0.07 |
| Alginate | 0.10 | 0.10 | 0.10 | | | | 0.10 | 0.10 | 0.10 | 0.10 | 0.10 | 0.10 | 0.10 |
| Gellan gum | | | | 0.10 | | | | | | | | | |
| Carrageenan gum | | | | | 0.10 | 0.10 | | | | | | | |
| Added water[a] | 68.55 | 68.55 | 68.65 | 68.65 | 68.65 | 68.65 | 66.43 | 61.42 | 68.50 | 68.35 | 68.80 | 69.15 | 68.73 |
| HPMC/CMC (wt. ratio) | 2 | 3.33 | 3.33 | 3.33 | 3.33 | 3.33 | 3.33 | 3.33 | 1.67 | 1.11 | ∞ | 0 | 7.14 |

* comparative example
[a] does not include water contained in the syrups

Testing Results

Table 2: Overrun and Firmness

| Sample | IE 1 | IE 2 | IE 3 | IE 4 | IE 5 | IE 6 | IE 7 | IE 8 |
|---|---|---|---|---|---|---|---|---|
| Overrun (%) | 322.30 | 302.39 | 302.42 | 312.50 | 314.69 | 336 | 324.53 | 355 |
| Firmness (g) | 170.15 | 172.15 | 175.70 | 195.82 | 190.74 | 208.63 | 245.35 | 226.19 |

| Sample | CE 9 | CE 10 | CE 11 | CE 12 | CE13 | Topp A | Topp B |
|---|---|---|---|---|---|---|---|
| Overrun (%) | 268.14 | 241.56 | 368.19 | 166.00 | 359.88 | 320 | 317 |
| Firmness (g) | 300.65 | 306.11 | 123.05 | 160.23 | 152.71 | 215.85 | 173.29 |

Table 2 shows the overrun and firmness of the prepared formulations and commercial products. If overrun is higher than 300 %, it is usually acceptable to the consumer. It can be seen that Inventive Examples 1-8 and Comparative Example 11 and 13 have high overrun (>300 %), but Comparative Examples 9, 10 and 12 have lower overrun of less than 300 % (HPMC/CMC ratio less than 1.7). In addition, IE 1 to 8 afford comparable firmness with the commercial products Topp A and B. This indicates that the inventive examples have comparable mouthfeel with the commercial products Topp A and B. In contrast, CE 9 and 10 have much higher firmness, which could lead to very bad mouthfeel. Although CE 11 and 13 have higher overrun than 300 %, both of them have much lower firmness than commercial products Topp A and B, which makes them too soft to be molded. The results show that the weight ratio of HPMC/CMC needs to be within 1.7 to 3.5 to afford good performance. Since CE 9, 10 and 12 could not meet the overrun requirement, the other properties were not tested in the following parts.

Table 3: Height Change Ratio (38° C, 3 h)

| Sample | IE 1 | IE 2 | IE 3 | IE 4 | IE 5 | IE 6 | IE 7 | IE 8 |
|---|---|---|---|---|---|---|---|---|
| Height Change Ratio (%) | 21.05 | 16.67 | 21.95 | 17.65 | 27.50 | 13.33 | 27.08 | 20.00 |

| Sample | CE 11 | CE 13 | Topp A | Topp B |
|---|---|---|---|---|
| Height Change Ratio (%) | 40.00 | 31.48 | 20.03 | 21.28 |

Table 3 shows height change ratio at 38°C for 3 h. IE 1 to 8 have foam stability at 38°C comparable to the commercial products Topp A and B. However, CE 11 and 13 show higher height change ratio. In terms of room temperature, all samples have no visible height change ratio. In addition, IE 2, 4 and 6 show better foam stability than the commercial products even at 38° C.

There is no water syneresis at room temperature after 220 min for all samples.

Table 4:  Water Syneresis (38°C, 220 min)

| Sample | IE 1 | IE 2 | IE 3 | IE 4 | IE 5 | IE 6 | IE 7 | IE 8 |
|---|---|---|---|---|---|---|---|---|
| Water Syneresis (g water/ g topping) | 0.40 | 0.49 | 0.51 | 0.55 | 0.52 | 0.51 | 0.13 | 0.28 |

| Sample | CE 11 | CE 13 | Topp A | Topp B |
|---|---|---|---|---|
| Water Syneresis (g water/ g topping) | 0.75 | 0.65 | 0.17 | 0.58 |

As seen from Table 4 water syneresis of all the inventive examples (IE 1-8) is lower than that of Topp B. Although almost all of the inventive examples show higher water syneresis than Topp A, they are still acceptable to the consumer. In addition, commercial products Topp A and Topp B originally have less water content than the inventive examples. Moreover, water syneresis of IE 7 is lower than that of Topp A and Topp B. CE 11 and 13 show higher water syneresis than others.

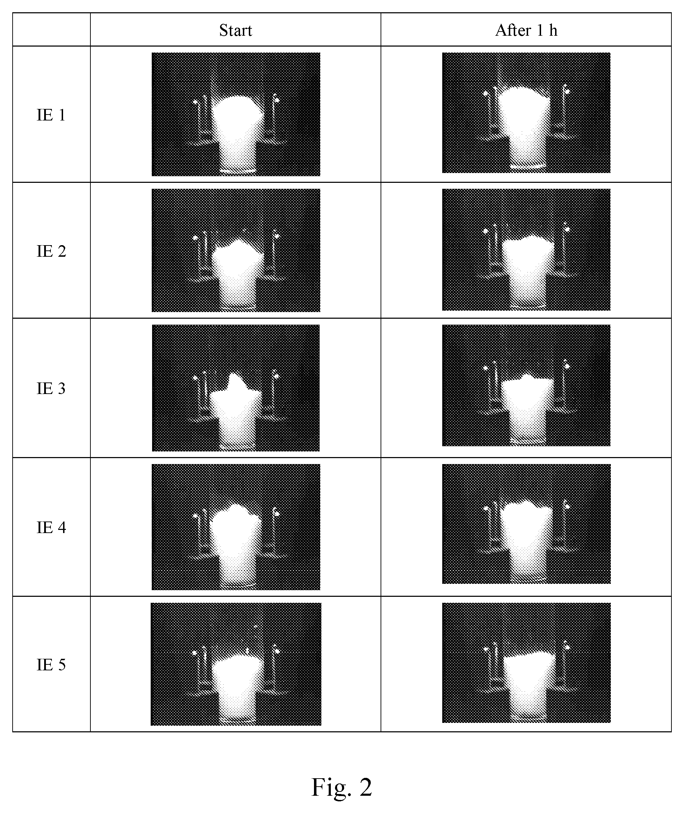

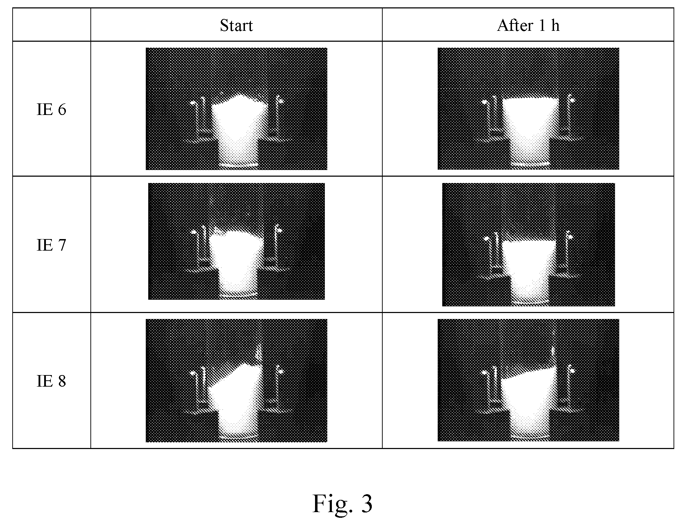

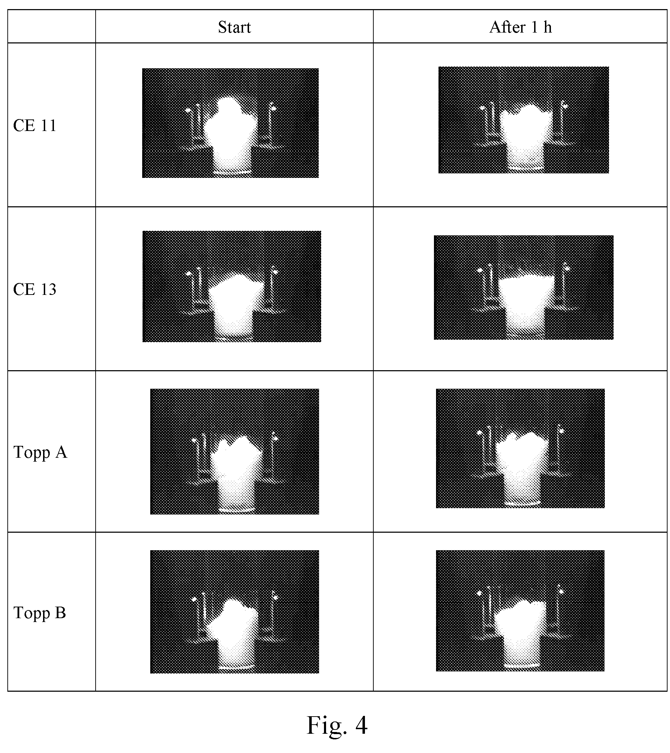

Fig. 2 and 3 show the foam appearance change after 60 min at 38° C of IE 1 to 5 and 6 to 8, respectively; and Fig. 4 shows the foam appearance change after 60 min at 38° C of CE 11 and 13 and of the commercial products Topp A and Topp B. It is obvious that the texture of IE 1 to 8 and CE 13 is smoother than that of the Topp A and comparable to Topp B after 1 hour at 38° C. CE 11 has a worse texture than the commercial products Topp A and Topp B.

It is evident that the comparative whipped toppings CE 9 to 13 not satisfying the HPMC/CMC ratio of from 1.7 to 3.5 have either low overrun or low thermal foam stability.

In summary, only the inventive whipped toppings IE 1 to 8 exhibit balanced properties, i.e. overrun of at least 300 % in combination with excellent foam appearance even at high temperature, comparable or lower height change ratio compared to the commercial high-fat protein-containing products and comparable or lower water syneresis compared to the commercial high-fat protein-containing products.

Fig. 1 shows a self-made instrument for measuring water syneresis.
Fig. 2 shows the foam appearance change after 60 min at 38° C of IE 1 to 5.
Fig. 3 shows the foam appearance change after 60 min at 38° C of IE 6 to 8.
Fig. 4 shows the foam appearance change after 60 min at 38° C of CE 11 and 13 and of the commercial products Topp A and Topp B.

**Claims**

**1.** A whippable topping composition comprising:

(a) 7 to 24 % by weight of water-soluble carbohydrates;
(b) 8 to 16 % by weight of fat;
(c) 0.3 to 1.5 % by weight of emulsifier;
(d) 0.2 to 1 % by weight of optionally methylated hydroxypropyl cellulose;
(e) 0.05 to 0.5 % by weight of carboxymethyl cellulose;
(f) 0 to 1 % by weight of non-protein hydrocolloid stabilizer different from components (a), (d) and (e);
(g) 0 to less than 0.2 % by weight of protein; and
(h) 53 to 84 % by weight of water,
all percentages being based on the total weight of the whippable topping composition,
wherein the weight ratio of optionally methylated hydroxypropyl cellulose (d) to carboxymethyl cellulose (e) is within the range of from 1.7:1 to 3.5:1.

2. The whippable topping composition of claim 1 wherein the optionally methylated hydroxypropyl cellulose (d) is hydroxypropyl methylcellulose.

3. The whippable topping composition of claims 1 or 2 comprising:

(a) 10 to 20 % by weight of water-soluble carbohydrates;
(b) 9 to 14 % by weight of fat;
(c) 0.5 to 1 % by weight of emulsifier;
(d) 0.5 to 1 % by weight of optionally methylated hydroxypropyl cellulose;
(e) 0.1 to 0.3 % by weight of carboxymethyl cellulose;
(f) 0.1 to 0.5 % by weight of non-protein hydrocolloid stabilizer different from components (a), (d) and (e);
(g) 0 to 0.05 % by weight of protein; and
(h) 59 to 79 % by weight of water,
all percentages being based on the total weight of the whippable topping composition.

4. The whippable topping composition of any of claims 1 to 3 which is free of protein.

5. The whippable topping composition of any of claims 1 to 4 wherein the water-soluble carbohydrates (a) are selected from dry glucose syrup solids such as dry corn syrup solids, dry glucose-fructose syrup solids (dry high-fructose corn syrup solids), granulated sugar, and mixtures thereof.

6. The whippable topping composition of any of claims 1 to 5 wherein the fat (b) is a vegetable fat, preferably a partially hydrogenated vegetable fat.

7. The whippable topping composition of claim 6 wherein the fat (b) is selected from partially hydrogenated palm kernel oil, partially hydrogenated palm oil, partially hydrogenated soybean oil and partially hydrogenated cottonseed oil.

8. The whippable topping composition of any of claims 1 to 7 wherein the non-protein hydrocolloid stabilizer (f) is a polysaccharide hydrocolloid.

9. The whippable topping composition of claim 8 wherein the non-protein hydrocolloid stabilizer (f) is a natural gum, preferably selected from vegetable gums, gums derived from algae, gums derived from bacteria, and mixtures thereof.

10. The whippable topping composition of any of claims 2 to 9 wherein the hydroxypropyl methylcellulose (d) has an average degree of substitution $DS_{methyl}$ of from 1.4 to 2.5 and a molar degree of substitution $MS_{hydroxypropyl}$ of from 0.1 to 0.4.

11. The whippable topping composition of any of claims 1 to 10 wherein the carboxymethyl cellulose (e) has an average degree of substitution $DS_{carboxymethyl}$ of from 0.4 to 1.5.

12. Whipped topping prepared from the whippable topping composition of any of claims 1 to 11.

13. Use of the whippable topping composition of any of claims 1 to 11 or the whipped topping of claim 12 to prepare an edible product.

14. A method for preparing the whippable topping composition of any of claims 1 to 11 comprising the steps:

(i) dispersing or dissolving water-soluble carbohydrates (a), one part of emulsifier (c), optionally methylated hydroxypropyl cellulose (d), carboxymethyl cellulose (e), optional further stabilizer (f), optional protein (g), and further optional water-soluble or water-dispersible ingredients in water to form an aqueous phase;
(ii) dispersing the other part of the emulsifier (c) in the fat (b) to form an oil phase, preferably by melting the fat (b);
(iii) mixing the aqueous phase from (i) with the oil phase from (ii);
(iv) pasteurizing the mixture;
(v) homogenizing the mixture;
(vi) cooling down the mixture quickly to a temperature of from 4 to 8°C; and

(vii) aging the mixture at a temperature of from 3 to 7°C; and
(viii) optionally freezing the mixture.

15. A method for preparing the whippable topping composition of any of claims 1 to 11 comprising the steps:

(i') dispersing emulsifier (c), optionally methylated hydroxypropyl cellulose (d), carboxymethyl cellulose (e), optional further stabilizer (f) and optional protein (g) in the fat (b) to form an oil phase, preferably by melting the fat (b);
(ii') dissolving or dispersing water-soluble carbohydrates (a) and further optional water-soluble or water-dispersible ingredients in water to form an aqueous phase;
(iii') mixing the aqueous phase from (ii') with the oil phase from (i');
(iv) pasteurizing the mixture;
(v) homogenizing the mixture;
(vi) cooling down the mixture quickly to a temperature of from 4 to 8°C; and
(vii) aging the mixture at a temperature of from 3 to 7°C, and
(viii) optionally freezing the mixture.

**Patentansprüche**

1. Aufschlagfähige Garnierungszusammensetzung, enthaltend:

(a) 7 bis 24 Gew.-% wasserlösliche Kohlenhydrate,
(b) 8 bis 16 Gew.-% Fett,
(c) 0,3 bis 1,5 Gew.-% Emulgator,
(d) 0,2 bis 1 Gew.-% optional methylierte Hydroxypropylcellulose,
(e) 0,05 bis 0,5 Gew.-% Carboxymethylcellulose,
(f) 0 bis 1 Gew.-% eines proteinfreien Hydrokolloidstabilisators, der sich von den Komponenten (a), (d) und (e) unterscheidet,
(g) 0 bis weniger als 0,2 Gew.-% Protein und
(h) 53 bis 84 Gew.-% Wasser,
wobei sich alle Prozentangaben auf das Gesamtgewicht der aufschlagfähigen Garnierungszusammensetzung beziehen und das Gewichtsverhältnis von optional methylierter Hydroxypropylcellulose (d) zu Carboxymethylcellulose (e) im Bereich von 1,7:1 bis 3,5:1 ist.

2. Aufschlagfähige Garnierungszusammensetzung nach Anspruch 1, wobei die optional methylierte Hydroxypropylcellulose (d) Hydroxypropylmethylcellulose ist.

3. Aufschlagfähige Garnierungszusammensetzung nach den Ansprüchen 1 oder 2, enthaltend:

(a) 10 bis 20 Gew.-% wasserlösliche Kohlenhydrate,
(b) 9 bis 14 Gew.-% Fett,
(c) 0,5 bis 1 Gew.-% Emulgator,
(d) 0,5 bis 1 Gew.-% optional methylierte Hydroxypropylcellulose,
(e) 0,1 bis 0,3 Gew.-% Carboxymethylcellulose,
(f) 0,1 bis 0,5 Gew.-% eines proteinfreien Hydrokolloidstabilisators, der sich von den Komponenten (a), (d) und (e) unterscheidet,
(g) 0 bis 0,05 Gew.-% Protein und
(h) 59 bis 79 Gew.-% Wasser,
wobei sich alle Prozentangaben auf das Gesamtgewicht der aufschlagfähigen Garnierungszusammensetzung beziehen.

4. Aufschlagfähige Garnierungszusammensetzung nach einem der Ansprüche 1 bis 3, die frei von Protein ist.

5. Aufschlagfähige Garnierungszusammensetzung nach einem der Ansprüche 1 bis 4, wobei die wasserlöslichen Kohlenhydrate (a) ausgewählt sind aus trockenen Glucosesirupfeststoffen, wie zum Beispiel trockenen Maissirupfeststoffen, trockenen Glucose-Fructosesirup-Feststoffen (trockene Maissirupfeststoffe mit hohem Fructosegehalt), Zuckerraffinade und Mischungen davon.

6. Aufschlagfähige Garnierungszusammensetzung nach einem der Ansprüche 1 bis 5, wobei das Fett (b) Pflanzenfett ist, vorzugsweise ein partiell hydriertes Pflanzenfett.

7. Aufschlagfähige Garnierungszusammensetzung nach Anspruch 6, wobei das Fett (b) ausgewählt ist aus partiell hydriertem Palmkernöl, partiell hydriertem Palmöl, partiell hydriertem Sojaöl und partiell hydriertem Baumwollsamenöl.

8. Aufschlagfähige Garnierungszusammensetzung nach einem der Ansprüche 1 bis 7, wobei der proteinfreie Hydrokolloidstabilisator (f) ein Polysaccharidhydrocolloid ist.

9. Aufschlagfähige Garnierungszusammensetzung nach Anspruch 8, wobei der proteinfreie Hydrokolloidstabilisator (f) ein natürlicher Gummi ist, vorzugsweise ausgewählt aus Pflanzengummen, Gummen die aus Algen gewonnen werden, Gummen die aus Bakterien gewonnen werden und Mischungen davon.

10. Aufschlagfähige Garnierungszusammensetzung nach einem der Ansprüche 2 bis 9, wobei die Hydroxypropylmethylcellulose (d) einen mittleren Substitutionsgrad $DS_{Methyl}$ von 1,4 bis 2,5 und einen mittleren Substitutionsgrad $MS_{Hydroxypropyl}$ von 0,1 bis 0,4 aufweist.

11. Aufschlagfähige Garnierungszusammensetzung nach einem der Ansprüche 1 bis 10, wobei die Carboxymethylcellulose (e) einen mittleren Substitutionsgrad $DS_{Carboxymethyl}$ von 0,4 bis 1,5 aufweist.

12. Aufschlagene Garnierung, hergestellt aus der aufschlagfähigen Garnierungszusammensetzung nach einem der Ansprüche 1 bis 11.

13. Verwendung der aufschlagfähigen Garnierungszusammensetzung nach einem der Ansprüche 1 bis 11 oder der aufgeschlagenen Garnierung nach Anspruch 12, um ein essbares Produkt herzustellen.

14. Verfahren zur Herstellung der aufschlagfähigen Garnierungszusammensetzung nach einem der Ansprüche 1 bis 11, umfassend die Schritte:

(i) Dispergieren oder Auflösen der wasserlöslichen Kohlenhydrate (a), eines Teils des Emulgators (c), der optional methylierten Hydroxypropylcellulose (d), der Carboxymethylcellulose (e), des optionalen weiteren Stabilisators (f), des optionalen Proteins (g) und der weiteren optionalen wasserlöslichen oder wasserdispergierbaren Bestandteile in Wasser, um eine wässrige Phase zu bilden,
(ii) Dispergieren des anderen Teils des Emulgators (c) in dem Fett (b), um eine Ölphase zu bilden, vorzugsweise durch Schmelzen des Fetts (b),
(iii) Mischen der wässrigen Phase aus (i) mit der Öl phase aus (ii),
(iv) Pasteurisieren der Mischung,
(v) Homogenisieren der Mischung,
(vi) schnelles Abkühlen der Mischung auf eine Temperatur von 4 bis 8°C und
(vii) Altern der Mischung bei einer Temperatur von 3 bis 7°C und
(viii) wahlweise Einfrieren der Mischung.

15. Verfahren zur Herstellung der aufschlagfähigen Garnierungszusammensetzung nach einem der Ansprüche 1 bis 11, umfassend die Schritte:

(i') Dispergieren des Emulgators (c), der optional methylierten Hydroxypropylcellulose (d), der Carboxymethylcellulose (e), des optionalen weiteren Stabilisators (f) und des optionalen Proteins (g) in dem Fett (b), um eine Ölphase zu bilden, vorzugsweise durch Schmelzen des Fetts (b),
(ii') Auflösen oder Dispergieren der wasserlöslichen Kohlenhydrate (a) und der weiteren optionalen wasserlöslichen oder wasserdispergierbaren Bestandteile in Wasser, um eine wässrige Phase zu bilden,
(iii') Mischen der wässrigen Phase aus (ii') mit der Ölphase aus (i'),
(iv) Pasteurisieren der Mischung,
(v) Homogenisieren der Mischung,
(vi) schnelles Abkühlen der Mischung auf eine Temperatur von 4 bis 8°C und
(vii) Altern der Mischung bei einer Temperatur von 3 bis 7°C und
(viii) wahlweise Einfrieren der Mischung.

**Revendications**

1. Une composition pour nappage fouettable comprenant :

   (a) de 7 à 24 % en poids de glucides solubles dans l'eau ;
   (b) de 8 à 16 % en poids de matières grasses ;
   (c) de 0,3 à 1,5 % en poids d'émulsifiant ;
   (d) de 0,2 à 1 % en poids d'hydroxypropylcellulose facultativement méthylée ;
   (e) de 0,05 à 0,5 % en poids de carboxyméthylcellulose ;
   (f) de 0 à 1 % en poids de stabilisant hydrocolloïde non protéique différent des constituants (a), (d) et (e) ;
   (g) de 0 à moins de 0,2 % en poids de protéine ; et
   (h) de 53 à 84 % en poids d'eau,
   tous les pourcentages étant rapportés au poids total de la composition pour nappage fouettable,
   dans laquelle le rapport en poids de l'hydroxypropylcellulose facultativement méthylée (d) à la carboxyméthylcellulose (e) est compris dans la gamme allant de 1,7/1 à 3,5/1.

2. La composition pour nappage fouettable de la revendication 1 dans laquelle l'hydroxypropylcellulose facultativement méthylée (d) est l'hydroxypropylméthylcellulose.

3. La composition pour nappage fouettable de la revendication 1 ou de la revendication 2 comprenant :

   (a) de 10 à 20 % en poids de glucides solubles dans l'eau ;
   (b) de 9 à 14 % en poids de matières grasses ;
   (c) de 0,5 à 1 % en poids d'émulsifiant ;
   (d) de 0,5 à 1 % en poids d'hydroxypropylcellulose facultativement méthylée ;
   (e) de 0,1 à 0,3 % en poids de carboxyméthylcellulose ;
   (f) de 0,1 à 0,5 % en poids de stabilisant hydrocolloïde non protéique différent des constituants (a), (d) et (e) ;
   (g) de 0 à 0,05 % en poids de protéine ; et
   (h) de 59 à 79 % en poids d'eau,
   tous les pourcentages étant rapportés au poids total de la composition pour nappage fouettable.

4. La composition pour nappage fouettable de n'importe lesquelles des revendications 1 à 3, laquelle est sans protéines.

5. La composition pour nappage fouettable de n'importe lesquelles des revendications 1 à 4 dans laquelle les glucides solubles dans l'eau (a) sont sélectionnés parmi des matières sèches de sirop de glucose déshydraté telles que des matières sèches de sirop de maïs déshydraté, des matières sèches de sirop de glucose-fructose déshydraté (matières sèches de sirop de maïs déshydraté à haute teneur en fructose), le sucre cristallisé, et des mélanges de ceux-ci.

6. La composition pour nappage fouettable de n'importe lesquelles des revendications 1 à 5 dans laquelle la matière grasse (b) est une graisse végétale, préférablement une graisse végétale partiellement hydrogénée.

7. La composition pour nappage fouettable de la revendication 6 dans laquelle la matière grasse (b) est sélectionnée parmi une huile de palmiste partiellement hydrogénée, une huile de palme partiellement hydrogénée, une huile de soja partiellement hydrogénée et une huile de coton partiellement hydrogénée.

8. La composition pour nappage fouettable de n'importe lesquelles des revendications 1 à 7 dans laquelle le stabilisant hydrocolloïde non protéique (f) est un hydrocolloïde de polysaccharide.

9. La composition pour nappage fouettable de la revendication 8 dans laquelle le stabilisant hydrocolloïde non protéique (f) est une gomme naturelle, de préférence sélectionnée parmi des gommes végétales, des gommes dérivées d'algues, des gommes dérivées de bactéries, et des mélanges de celles-ci.

10. La composition pour nappage fouettable de n'importe lesquelles des revendications 2 à 9 dans laquelle l'hydroxypropylméthylcellulose (d) a un degré moyen de substitution $DS_{méthyle}$ allant de 1,4 à 2,5 et un degré molaire de substitution $MS_{hydroxypropyle}$ allant de 0,1 à 0,4.

11. La composition pour nappage fouettable de n'importe lesquelles des revendications 1 à 10 dans laquelle la carboxyméthylcellulose (e) a un degré moyen de substitution $DS_{carboxyméthyle}$ allant de 0,4 à 1,5.

**12.** Nappage fouetté préparé à partir de la composition pour nappage fouettable de n'importe lesquelles des revendications 1 à 11.

**13.** Utilisation de la composition pour nappage fouettable de n'importe lesquelles des revendications 1 à 11 ou du nappage fouetté de la revendication 12 pour préparer un produit comestible.

**14.** Une méthode de préparation de la composition pour nappage fouettable de n'importe lesquelles des revendications 1 à 11 comprenant les étapes consistant à :

(i) disperser ou dissoudre des glucides solubles dans l'eau (a), une partie d'émulsifiant (c), de l'hydroxypropylcellulose facultativement méthylée (d), de la carboxyméthylcellulose (e), un stabilisant supplémentaire facultatif (f), une protéine facultative (g), et des ingrédients solubles dans l'eau ou dispersables dans l'eau facultatifs supplémentaires dans de l'eau pour former une phase aqueuse ;
(ii) disperser l'autre partie de l'émulsifiant (c) dans la matière grasse (b) pour former une phase huileuse, préférablement en faisant fondre la matière grasse (b) ;
(iii) mélanger la phase aqueuse issue de l'étape (i) avec la phase huileuse issue de l'étape (ii) ;
(iv) pasteuriser le mélange ;
(v) homogénéiser le mélange ;
(vi) faire rapidement refroidir le mélange jusqu'à une température comprise entre 4 et 8 °C ; et
(vii) faire vieillir le mélange à une température comprise entre 3 et 7 °C ; et
(viii) congeler facultativement le mélange.

**15.** Une méthode de préparation de la composition pour nappage fouettable de n'importe lesquelles des revendications 1 à 11 comprenant les étapes consistant à :

(i') disperser un émulsifiant (c), de l'hydroxypropylcellulose facultativement méthylée (d), de la carboxyméthylcellulose (e), un stabilisant supplémentaire facultatif (f) et une protéine facultative (g) dans la matière grasse (b) pour former une phase huileuse, préférablement en faisant fondre la matière grasse (b) ;
(ii') dissoudre ou disperser des glucides solubles dans l'eau (a) et des ingrédients solubles dans l'eau ou dispersables dans l'eau facultatifs supplémentaires dans de l'eau pour former une phase aqueuse ;
(iii') mélanger la phase aqueuse issue de l'étape (ii') avec la phase huileuse issue de l'étape (i') ;
(iv) pasteuriser le mélange ;
(v) homogénéiser le mélange ;
(vi) faire rapidement refroidir le mélange jusqu'à une température comprise entre 4 et 8 °C ; et
(vii) faire vieillir le mélange à une température comprise entre 3 et 7 °C ; et
(viii) congeler facultativement le mélange.

Fig. 1

| | Start | After 1 h |
|---|---|---|
| IE 1 | | |
| IE 2 | | |
| IE 3 | | |
| IE 4 | | |
| IE 5 | | |

Fig. 2

| | Start | After 1 h |
|---|---|---|
| IE 6 | | |
| IE 7 | | |
| IE 8 | | |

Fig. 3

|  | Start | After 1 h |
|---|---|---|
| CE 11 | | |
| CE 13 | | |
| Topp A | | |
| Topp B | | |

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4208444 A
- US 5759609 A
- US 5384145 A
- US 5707677 A